(19) **Europäisches Patentamt / European Patent Office / Office européen des brevets**

(11) **EP 2 798 929 B1**

(12) **FASCICULE DE BREVET EUROPEEN**

(45) Date de publication et mention
de la délivrance du brevet:
**19.08.2015 Bulletin 2015/34**

(51) Int Cl.:
**A01C 17/00** *(2006.01)*  **A01C 21/00** *(2006.01)*

(21) Numéro de dépôt: **14160293.8**

(22) Date de dépôt: **17.03.2014**

(54) **Procédé de paramétrage automatique d'un contrôleur de tâches d'une machine agricole, programme d'ordinateur, unité de commande et machine agricole correspondants**

Verfahren zur automatischen Parametrisierung einer Kontrollvorrichtung für Arbeitsvorgänge einer Landmaschine, entsprechendes Computerprogramm, entsprechende Steuereinheit und entsprechende landwirtschaftliche Maschine

Method for automatic parameterisation of a task controller of an agricultural machine, corresponding computer program, control unit and agricultural machine

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.05.2013 FR 1354114**
**19.06.2013 FR 1355786**

(43) Date de publication de la demande:
**05.11.2014 Bulletin 2014/45**

(73) Titulaire: **SULKY-BUREL**
**35220 Chateaubourg (FR)**

(72) Inventeurs:
• **Leveille, Lionel**
**35500 Vitré (FR)**
• **Juhel, Thomas**
**35133 Lécousse (FR)**

(74) Mandataire: **Vidon Brevets & Stratégie**
**16B, rue de Jouanet**
**BP 90333**
**35703 Rennes Cedex 7 (FR)**

(56) Documents cités:
**EP-A1- 2 080 430    EP-A1- 2 198 683**
**EP-A2- 0 127 922    EP-A2- 1 247 437**

**Description**

1. Domaine de l'invention

Le domaine de l'invention est celui des machines agricoles, et plus précisément des dispositifs d'épandage de particules pour machine agricole. Par particules, on entend ici les graines pour semis, les engrais, les pesticides, et plus généralement tout matériau se présentant sous la forme de particules et susceptibles d'être distribué avec précision, notamment dans le domaine de l'agriculture.

Plus particulièrement, l'invention concerne le paramétrage automatique d'une unité de commande d'une machine agricole équipée d'un tel dispositif d'épandage, permettant de piloter un module de contrôleur de tâches équipé d'une fonction dite de coupure de tronçons.

2. Art antérieur et inconvénients

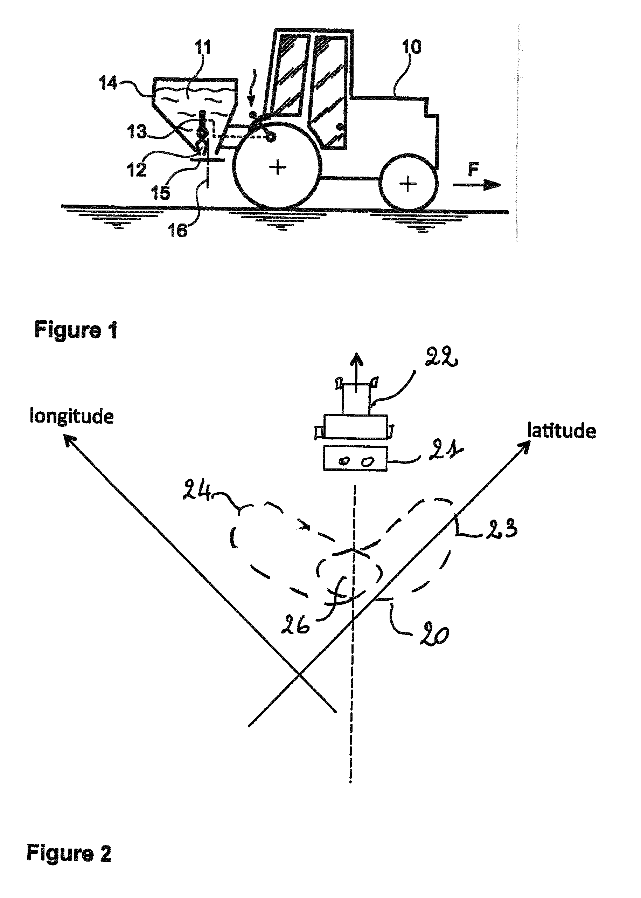

Dans les domaines de l'agriculture et notamment de l'agriculture de précision, les machines servant à épandre de l'engrais ou des semis sur une parcelle cultivable, se présentent généralement sous la forme d'un tracteur 10 portant une trémie 11 contenant l'engrais 14 à épandre, comme illustré sur la figure 1.

Selon une technique classique, le fond de la trémie 11 comprend au moins une ouverture 12 laissant passer le contenu 11 de la trémie 14 en surplomb d'un distributeur comprenant au moins un disque rotatif 15 portant des pales de projection. Les disques 15 sont le plus souvent disposés dans une position sensiblement horizontale et leur rotation autour d'un axe 16 sensiblement vertical favorise la projection du contenu 14 de la trémie par effet centrifuge, sous la forme d'une nappe s'étendant à l'arrière de la machine d'épandage.

Classiquement, les distributeurs équipant les machines d'épandage du domaine de l'agriculture utilisent au moins deux disques rotatifs tournant en sens inverses l'un par rapport à l'autre, une telle configuration permettant de réaliser un épandage en engrais et/ou en semis sur une grande largeur, généralement comprise entre 5 et 50 mètres, en fonction des paramètres de commande transmis au distributeur.

De telles machines d'épandage permettent de traiter une parcelle de terrain cultivable, le plus généralement par trajet prédéfini d'aller/retour sur celle-ci.

L'épandage est donc réalisé durant chaque trajet de la machine sur une bande d'une largeur prédéterminée, éventuellement modifiable, laquelle doit venir en chevauchement de la bande adjacente pour pallier la diminution de la densité en particules de la nappe d'épandage l'extérieur de chaque zone traitée.

L'utilisation de telles machines s'avèrent cependant limitée et peu optimale dans un contexte lié à l'agriculture de précision dans lequel les doses réelles à épandre sur le sol d'une parcelle cultivable doivent tenir compte de consignes optimisées et préalablement établies, lesquelles doivent être en parfaite conformité avec les contraintes environnementales, ou encore avec les besoins réels estimés en semis ou en engrais pour le sol ou la culture de la parcelle.

Pour tendre vers une optimisation des doses de produits ou de particules (engrais ou semis) à épandre en différents points ou en différentes zones d'une parcelle à traiter, on connaît de l'art antérieur, notamment dans les documents de brevet n° EP 0 726 024, EP 0 761 084, EP 0 917 816, ou encore EP 1 181 857, des solutions consistant en une machine d'épandage centrifuge apte à prendre en compte des données d'une carte d'application préalablement mémorisée.

Ces machines d'épandage convertissent une dose consigne en une dose réelle délivrée sur le sol lors du passage de la machine d'épandage. Le pilotage du distributeur utilisé par la machine d'épandage est ainsi réalisé pendant le déplacement de la machine d'épandage sur la parcelle, de façon que la dose réellement délivrée corresponde sensiblement à la dose consigne prédéterminée.

Il existe par ailleurs des systèmes permettant d'automatiser la pulvérisation de produits liquides, connus sous le nom de coupure de tronçons. Un pulvérisateur met en oeuvre une rampe de pulvérisation, que l'on peut décomposer en plusieurs tronçons. Plusieurs sociétés proposent des coupures de tronçons, c'est-à-dire des systèmes pilotés par des moyens de géolocalisation (GPS) permettant d'activer sélectivement ces tronçons de pulvérisation en fonction de la position de la machine dans le champ.

Cette technique a été ensuite adaptée à l'épandage de particules, avec des moyens manuels ou automatiques de coupure de tronçons, selon la technique décrite dans le document EP 2 198 683.

Selon une technique de l'art antérieur permettant d'automatiser la coupure de tronçons, le paramétrage du module de coupure de tronçons d'un dispositif de distribution peut être mis en oeuvre via un module de coupure noté TCSC (pour contrôleur de tâches coupure de section ou « Task Controller Section Control » en anglais) compatible avec le protocole de communication ISOBUS (en particulier ISO 11783). Pour gérer la communication entre un terminal virtuel ISOBUS et la machine agricole, des unités de contrôle électroniques (ECUs en anglais) sont utilisées pour charger des fichiers comprenant une interface homme-machine, appelés « fichiers IOP » (pour « ISOBUS Objet Pool » en anglais).

Il existe également des fichiers de type ISOXML stockant des informations de paramétrage de la machine agricole, pour différentes configurations d'épandage.

Enfin, on connaît également des logiciels aptes à stocker un certain nombre de profils de réglage d'un module de coupure de type TCSC, par exemple via des fichiers de type tableur.

Un inconvénient majeur de ces techniques de l'art antérieur réside dans le paramétrage manuel du distributeur de la machine d'épandage, souvent fastidieux pour l'utilisateur, qui doit saisir un grand nombre de données de paramétrage, par exemple à partir de documents de référence, ou abaques, fournis par le constructeur du distributeur. Ainsi, les réglages ou paramétrages saisis par l'utilisateur ne sont généralement pas des informations mesurées ou mesurables par l'utilisateur et leur saisie manuelle est donc source d'erreurs de programmation, pouvant avoir un impact important sur l'épandage, et en particulier les doses de particules utilisées ou l'uniformité de l'épandage sur toute la parcelle. Enfin, un tel paramétrage basé sur des abaques ne permet pas de s'adapter à toute largeur de travail, comme par exemple une largeur de travail spéciale pour légumes (20,60m) ou toute caractéristique technique des éléments composant le distributeur (comme par exemple les jeux de disque), ou encore certaines caractéristiques du produit à épandre autorisé.

### 3. Objectifs de l'invention

L'invention a notamment pour objectif de pallier ces inconvénients de l'état de l'art.

Plus précisément, un objectif de l'invention est, selon au moins un mode de réalisation, de fournir une nouvelle technique de paramétrage d'un module de coupure de tronçons d'un dispositif de distribution des particules plus simple et rapide à manipuler par l'utilisateur du dispositif.

Un autre objectif de l'invention est, selon au moins un mode de réalisation, de fournir une nouvelle technique de paramétrage d'un module de coupure de tronçons d'un dispositif de distribution des particules limitant les erreurs de programmation dues aux saisies manuelles de l'utilisateur.

Selon un autre aspect, l'invention a également pour objectif, de fournir une nouvelle technique de paramétrage d'un module de coupure de tronçons d'un dispositif de distribution des particules, qui soit simple à mettre en oeuvre, efficace et peu coûteuse.

Ainsi un objectif particulier de l'invention est d'optimiser le paramétrage d'un module de coupure de tronçons d'un dispositif de distribution des particules de tout type, graines de différentes dimensions, engrais, quelles que soient les caractéristiques spécifiques liées à la machine agricole utilisée (largeur de travail, jeu de disques, ...).

### 4. Présentation de l'invention

L'invention concerne un procédé de paramétrage automatique d'un contrôleur de tâches commandant des moyens de coupure de tronçons d'une machine agricole équipée d'un dispositif d'épandage de particules mettant en oeuvre au moins deux disques rotatifs portant des pales de projection.

Selon l'invention, pour au moins un jeu de disques du dispositif d'épandage et un tronçon $N$, le procédé comprend une étape de calcul des coordonnées du tronçon $N$ tenant compte de la forme de la nappe d'épandage et une étape de transmission des coordonnées au contrôleur de tâches.

Ainsi, l'invention propose une solution nouvelle et inventive du paramétrage d'un module de coupure de tronçons d'un dispositif d'épandage, permettant un paramétrage automatique, à partir de données représentatives de la forme de la nappe d'épandage.

Ainsi, on dispose automatiquement de la position réelle de chaque tronçon de distribution, par exemple la position de son centre, ou d'un point précis identifiable comme un point d'extrémité gauche/droite le plus éloigné/proche du disque d'épandage, quelle que soit la largeur de travail saisie par l'utilisateur, et quel que soit le jeu de disques utilisé.

En particulier, l'étape de calcul des coordonnées du tronçon N, délivre une valeur $DL\_N$ de décalage latéral du tronçon $N,$ et une valeur d'un décalage $DA\_N$ derrière le disque d'épandage du tronçon $N,$ la valeur $DL\_N$ tenant compte des données suivantes :

- un nombre maximal de tronçons,
- une donnée de paramétrage représentative de la largeur de travail Lw du dispositif d'épandage, saisie par un utilisateur de la machine agricole via un module de saisie d'une unité de commande de la machine agricole,
- au moins une première constante représentative du jeu de disques.

Ainsi, l'invention repose sur une approche nouvelle et inventive du paramétrage d'un module de coupure de tronçons d'un dispositif d'épandage, permettant un paramétrage automatique, à partir d'une donnée saisie par l'utilisateur, d'un nombre maximal de tronçons et de constante(s) prédéterminée(s) dépendante(s) du jeu de disques utilisé par le dispositif d'épandage.

Le décalage arrière *DA_N* d'un tronçon *N* peut s'écrire sous la forme d'une fonction mathématique *f(Nmax, Lw, N)*.

Par exemple, cette fonction peut s'écrire sous la forme d'un polynôme de degré n tel que : $DA\_N = \sum_{r=0}^{n} Kr.(DL\_N)^r$ .

De cette manière, la saisie manuelle effectuée par l'utilisateur est fortement simplifiée, car au lieu de saisir, selon l'état de la technique actuel, une suite de données provenant de documents de référence, comme des abaques, et souvent fastidieuses à saisir, l'utilisateur n'a plus qu'une donnée à saisir. De plus, cette opération de saisie étant fastidieuse, certains constructeurs fournissent des abaques dont par exemple les valeurs du décalage *DA_N* derrière le disque d'épandage sont identiques pour tous les tronçons, ce qui représente une approximation qui dégrade fortement la qualité de travail.

De plus, le calcul effectué par l'unité de commande de la machine agricole permet de s'adapter à tout type de jeu de disques utilisé, les constantes prises en compte dans le calcul tenant compte du jeu de disques utilisé.

Le paramétrage automatique du module de coupure de tronçons permet de s'adapter à toute largeur de travail, cette donnée étant celle saisie par l'utilisateur. Ainsi, l'invention permet de calculer automatiquement un profil de réglage du module de coupure de tronçons adapté à la forme réelle en croissant de la nappe d'épandage, quelle que soit la largeur de travail, donnée saisie par l'utilisateur, et quel que soit le jeu de disques utilisé, les constantes utilisées dans le calcul étant dépendantes de cette caractéristique.

Le paramétrage du module de coupure de tronçons selon ce mode de réalisation de l'invention est non seulement automatique, ce qui le rend « transparent » pour l'utilisateur, qui n'a plus qu'une donnée à saisir, mais également adaptable à toutes configurations d'épandage, quelle que soit la largeur de travail et quel que soit le jeu de disques utilisé.

Le procédé permet de calculer les coordonnées « *en X et en Y*» du tronçon, correspondant respectivement au décalage derrière le disque d'épandage du tronçon et au décalage latéral du tronçon, par rapport au sens d'avancement de la machine d'épandage, contrairement à certaines techniques de l'art antérieur, selon lesquelles ces coordonnées devaient être saisies, par l'utilisateur, à partir de données de référence, avec les risques d'erreur et d'imprécision que cela comportait.

De cette manière, on dispose automatiquement de la position réelle de chaque tronçon de distribution, par exemple la position de son centre, ou d'un point précis identifiable comme un point d'extrémité gauche/droite le plus éloigné/proche du disque d'épandage, quelle que soit la largeur de travail saisie par l'utilisateur, et quel que soit le jeu de disques utilisé.

Selon un aspect particulier de l'invention, la valeur *DL_N* s'écrit de la manière suivante :

$$DL\_N = (N - (0{,}5*Nmax + 0{,}5))*(Lw/Nmax),\ \text{avec } Nmax \text{ égal au nombre total de}$$

tronçons.

Selon une caractéristique particulière de l'invention, l'étape de calcul comprend une sous-étape de résolution d'une équation présentant au moins trois constantes prédéterminées dépendantes du jeu de disques, notée *K0, K2* et *K4.*

Selon ce mode de réalisation de l'invention, le calcul de la première coordonnée en X du tronçon, correspondant au décalage derrière le disque d'épandage du tronçon, dépend de trois constantes, elles-mêmes dépendantes du jeu de disques utilisé.

De cette manière, le paramétrage automatique du module de coupure de tronçons tient compte de la largeur de travail saisie par l'utilisateur, du nombre maximal de tronçons, ainsi que de trois constantes prédéterminées, mémorisées dans l'unité de commande de la machine agricole, et dépendantes du jeu de disques utilisé.

Par exemple, l'équation s'écrit de la manière suivante :

$$DA\_N = (K4*DL\_N^4) + (K2*DL\_N^2) + K0.$$

Selon un mode de réalisation particulier de l'invention, la première constante prédéterminée est représentative de la plage de travail du jeu de disques, notée *Lw moy.*

Selon ce mode de réalisation de l'invention, une seule constante est utilisée pour calculer la première coordonnée du tronçon, cette constante correspondant par exemple à une valeur moyenne de la plage de travail du jeu de disques.

En effet, les inventeurs de la présente demande ont constaté qu'il était possible de déterminer les valeurs des constantes utilisées selon le mode de réalisation précédemment décrit, à partir de la plage de travail du jeu de disques utilisés.

De cette manière, la coordonnée en *X* du tronçon correspondant au décalage derrière le disque d'épandage du tronçon dépend de la coordonnée en *Y* calculée à partir de la largeur de travail saisie par l'utilisateur, ainsi que du nombre maximal de tronçons, comme décrit ci-dessus, ainsi que de la largeur moyenne des disques utilisés.

Par exemple, la valeur *DA_N* s'écrit de la manière suivante :

$$DA\_N = [(1{,}31*10e^{-6}Lmoy - 9{,}78*10e^{-5})*DL\_N^4]$$

$$+ [(-7{,}12*10e^{-4}Lmoy + 0{,}07)*DL\_N^2] + (-0{,}17*Lmoy - 9{,}93).$$

Selon un aspect particulier de l'invention, l'étape de transmission des coordonnées au contrôleur de tâches met en oeuvre au moins un fichier de type ISO XML.

Selon un mode de réalisation particulier de l'invention, l'étape de calcul tient compte également d'une donnée représentative du type de particules.

Ainsi, si les particules à épandre présentent des caractéristiques particulières impactant l'épandage, et par exemple la portée de projection, alors le procédé de paramétrage automatique selon ce mode de réalisation de l'invention permet de tenir compte de ces caractéristiques et de calculer les coordonnées du centre de chaque tronçon de manière plus appropriée au type de particules, comme par exemple pour l'épandage d'un produit anti-limaces ou d'un engrais à faible portée de projection.

Selon un autre mode de réalisation particulier de l'invention, l'étape de calcul tient compte également d'une donnée représentative d'une forme spécifique d'épandage. Par exemple, lors d'un épandage en bordure de champ, le procédé de paramétrage automatique selon ce mode de réalisation de l'invention permet d'adapter le calcul des coordonnées du centre de chaque tronçon à la forme spécifiques de l'épandage, et ainsi de tenir compte par exemple de valeurs de constantes spécifiques, pour les deux disques ou pour un seul disque d'épandage.

Selon un autre aspect de l'invention, l'étape de calcul comprend une sous-étape de correction de la valeur *DA_N* en fonction d'une information représentative d'au moins un paramètre appartenant au groupe comprenant :

- une vitesse de rotation des disques ;
- un angle d'attelage du dispositif d'épandage de particules ;
- une hauteur d'attelage du dispositif d'épandage de particules.

Ainsi, il est possible d'apporter un facteur correctif aux calculs des coordonnées d'un tronçon, pour tenir compte de paramètres de réglage du dispositif d'épandage, comme par exemple la vitesse de rotation des disques, ou l'angle et/ou la hauteur d'attelage (par exemple dans le cas d'un épandage tardif).

L'invention concerne également une unité de commande d'une machine agricole équipée d'un dispositif d'épandage de particules mettant en oeuvre au moins deux disques rotatifs portant des pales de projection, ladite machine étant également équipée de moyens de coupure de tronçons commandés par un contrôleur de tâches.

Selon ce mode de réalisation de l'invention, pour au moins un jeu de disques du dispositif d'épandage et un tronçon *N,* l'unité de commande comprend des moyens de calcul des coordonnées du tronçon *N,* et des moyens de transmission des coordonnées au contrôleur de tâches.

En particulier, les moyens de calcul délivrent une valeur *DL_N* de décalage latéral du tronçon *N,* et une valeur d'un décalage *DA_N* derrière le disque d'épandage du tronçon N, la valeur *DL_N* tenant compte des données suivantes :

  o un nombre maximal de tronçons,
  o une donnée de paramétrage représentative de la largeur de travail Lw du dispositif d'épandage, saisie par un utilisateur de la machine agricole via un module de saisie de l'unité de commande,
  ∘ au moins une première constante représentative du jeu de disques.

L'invention concerne également une machine agricole comprenant une unité de commande telle que décrite précédemment.

Enfin, l'invention concerne un programme d'ordinateur comportant des instructions pour la mise en oeuvre d'un procédé de paramétrage automatique d'une unité de commande d'une machine agricole tel que décrit précédemment, lorsque ce programme est exécuté par un processeur.

5. Liste des figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :

- la figure 1, déjà décrite en relation avec l'art antérieur, présente une vue schématique de côté d'une machine d'épandage de semis ou d'engrais ;
- la figure 2 présente un exemple de détermination et/ou modélisation de la forme réelle de la nappe de particules granulaires recouvrant le sol en sortie du distributeur, pendant la phase d'épandage ;
- les figures 3a à 3c illustrent deux exemples de représentation de la position des tronçons de la nappe de particules granulaires recouvrant le sol en sortie du distributeur, pendant la phase d'épandage, selon un mode de réalisation particulier de l'invention ;
- la figure 4 illustre les principales étapes du procédé de programmation automatique d'une unité de commande, selon un mode de réalisation particulier de l'invention ;
- la figure 5 présente un exemple de diagramme de séquences illustrant les échanges entre une unité de commande et un contrôleur de tâches, selon un mode de réalisation particulier de l'invention.

6. Description de modes de réalisation

*6.1 Principe général*

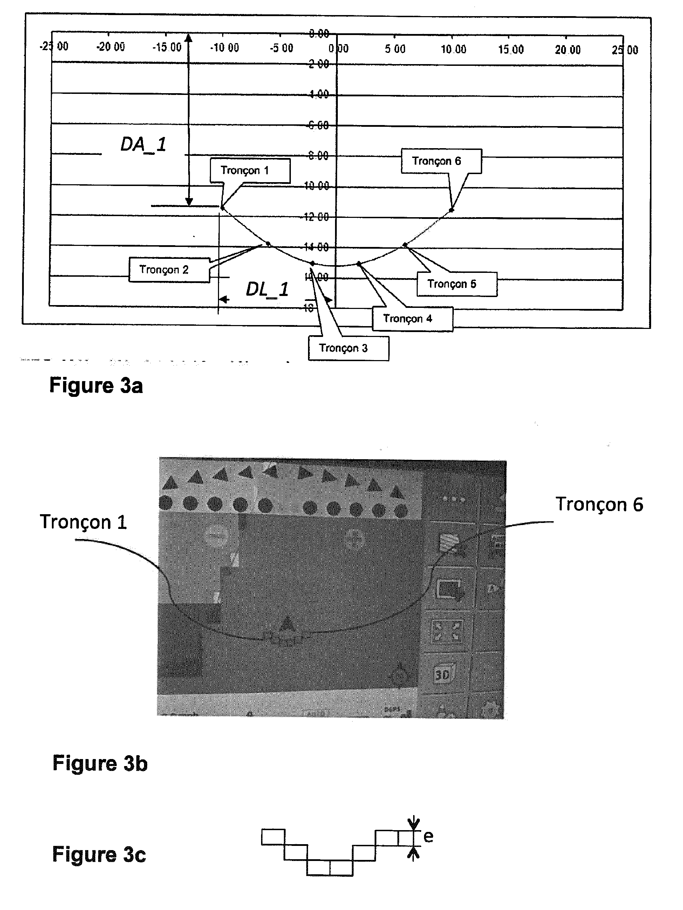

La présente invention concerne un procédé de paramétrage, ou de programmation, automatique d'un contrôleur de tâches commandant des moyens de coupure de tronçons d'une machine agricole équipée d'un dispositif d'épandage de particules mettant en oeuvre au moins deux disques rotatifs portant des pales de projection.
Selon les différents modes de réalisation particuliers de l'invention, le procédé permet une simplification/optimisation des saisies de l'utilisateur de la machine agricole, de façon d'une part à limiter les erreurs de saisies et d'autre part à permettre un paramétrage quelle que soit la largeur de travail et/ou quel que soit le jeu de disques utilisé, et/ou quel que soit le type de particules à épandre.
En particulier, le procédé selon les différents modes de réalisation de l'invention permet un paramétrage automatique optimisé du module de coupure de tronçons mis en oeuvre dans un dispositif de distribution de particules pour machine agricole.
Pour ce faire, le procédé selon les différents modes de réalisation particuliers de l'invention se base sur le constat que la nappe d'épandage (20) obtenue en sortie du distributeur (21) d'une telle machine agricole d'épandage (22) n'est pas de forme rectangulaire comme présupposé et pris en compte dans les solutions de l'art antérieur, mais d'une forme pouvant s'apparenter à un croissant, comme illustré en figure 2. Plus précisément, la forme en croissant de cette nappe (20) est composée de l'assemblage de nappes droite (23) et gauche (24) produites par chacun des deux disques rotatifs du distributeur, ces deux nappes (23, 24) se recouvrant en au moins une zone (26) en l'une de leurs extrémités respectives.
Ainsi, le procédé de paramétrage automatique de l'invention permet de calculer un profil de réglage de la coupure de tronçons adapté la forme en croissant de la nappe d'épandage, de façon automatique, et quels que soient la largeur de travail et le jeu de disques.
On considère ici un paramétrage de la coupure de tronçons du dispositif de distribution mis en oeuvre via un module de coupure noté TCSC (pour contrôleur de tâches coupure de section ou « Task Controller Section Control » en anglais) compatible avec le protocole de communication ISOBUS, par exemple la norme ISO 11783-10. Le paramétrage selon l'invention pourra bien sûr être adapté aux révisions à venir de la norme ISOBUS, ou à d'autres normes de communication.
Pour obtenir des profils de réglage de ce module de coupure, le procédé selon les différents modes de réalisation de l'invention permet de calculer, via une mise en équation des paramètres nécessaires au réglage (comme par exemple la largeur de travail, le jeu de disques, ou encore le type de particules), les coordonnées $DA\_N$ et $DL\_N$ de chacun des tronçons, correspondant respectivement au décalage derrière le disque d'épandage pour le tronçon et au décalage latéral du tronçon, par rapport au sens d'avancement de la machine, comme illustré en figure 3a. On note qu'il est d'usage, comme illustré sur cette figure 3a, de numéroter les tronçons en commençant par celui situé le plus à l'extérieur du côté gauche. Par ailleurs, les coordonnées $DA\_N$ et $DL\_N$ peuvent par exemple correspondre aux coordonnées du centre d'un tronçon, ou bien aux coordonnées d'un point à une extrémité d'un tronçon (extrémité gauche/droite la plus éloignée/proche du disque ...)...
Sur cette figure 3a sont représentés six tronçons, dont les centres respectifs sont identifiés par des étiquettes intitulées « Tronçon $N$ », les coordonnées $DA\_1$ et $DL\_1$ étant clairement représentées pour le tronçon 1.
Les figures 3b et 3c illustrent quant à elles une visualisation de tronçons, « en épaisseur » (notée « e » sur la figure 3c), sur un écran de contrôle d'un module TCSC.

*6.2 Description d'un premier mode de réalisation*

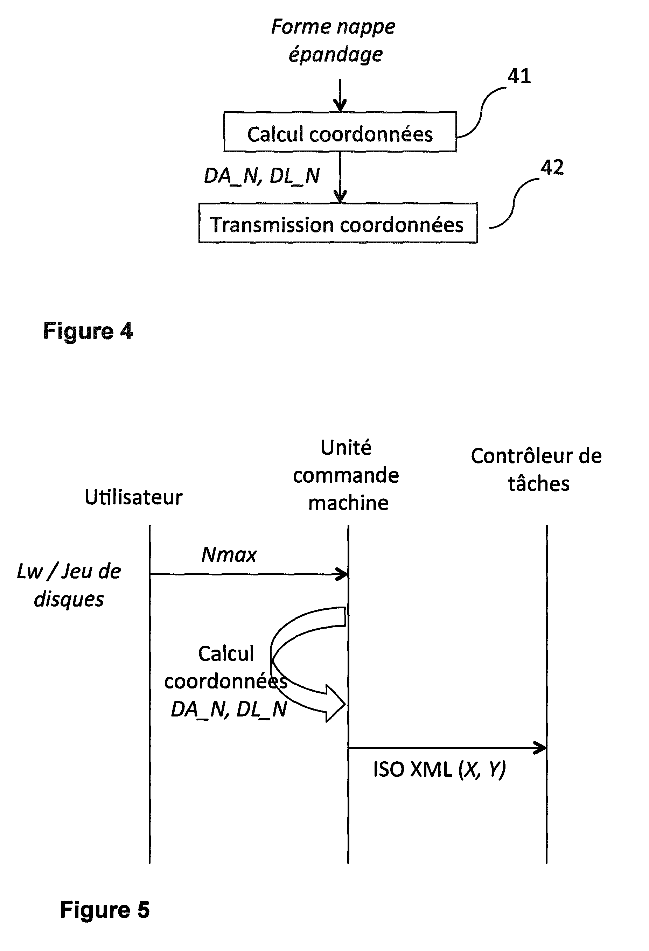

Selon un premier mode de réalisation de l'invention, dont les étapes sont illustrées en figure 4, le procédé comprend, pour au moins un tronçon N identifié de la représentation de la nappe d'épandage, une étape 41 de calcul des coordonnées de ce tronçon, délivrant une valeur $DL\_N$ de décalage latéral du tronçon N, et une valeur d'un décalage $DA\_N$ derrière le disque d'épandage du tronçon N, tenant compte de la forme de la nappe d'épandage.

Par exemple, selon un mode de réalisation particulier de l'invention, la valeur $DL\_N$ de décalage latéral tient compte :

- d'un nombre maximal de tronçons;
- d'au moins une première constante représentative du jeu de disques utilisé ;
- d'une donnée de paramétrage saisie par un utilisateur, cette donnée étant par exemple représentative de la largeur de travail *Lw,* en mètre, c'est-à-dire une information facile à connaître et à saisir par l'utilisateur.

Cette donnée de paramétrage est saisie par l'utilisateur de préférence au début du paramétrage, et donc valable pour le calcul du profil de réglage de la coupure de tous les tronçons.

Le résultat de ce calcul, par exemple les valeurs $DA\_N$ et $DL\_N,$ est ensuite transmis, lors d'une étape 42 de transmission, au contrôleur de tâches pilotant les moyens de coupure de tronçons.

En particulier, la coordonnée $DA\_N$ s'écrit de la manière suivante :

$$DA\_N = (K4*DL\_N^4) + (K2*DL\_N^2) + K0 \quad \text{(Equation 1)}$$

avec *K0, K2* et *K4* des constantes dépendantes du jeu de disques utilisé.

Par exemple, les valeurs des constantes *K0, K2* et *K4* peuvent être définies en fonction de caractéristiques (classiquement utilisées) de largeur des disques (12/28, 24/36, 32/44 et 40/50) de la façon suivante :

$$-8.10e^{-5} < K4 < 1.\ 10e^{-5},\ 0,02 < K2 < 0,06\ \text{et}\ -20 < <K0 < -8.$$

Par ailleurs, comme indiqué dans l'équation 1, le calcul de la coordonnée $DA\_N$ dépend également de la coordonnée $DL\_N$, pouvant être définie comme suit :

$$DL\_N = (N - (0,5*Nmax + 0,5))*(Lw/Nmax) \qquad \text{(Equation 2)}$$

avec *Nmax* égal au nombre total de tronçons et *Lw* étant la longueur de travail saisie par l'utilisateur.

Ainsi, à partir d'une seule saisie utilisateur (*Lw*), des informations connues du nombre maximum de tronçon (valeur par exemple stockée en usine dans l'unité de commande de la machine agricole) et des valeurs de trois constantes *K0, K2* et *K4* dépendantes du jeu de disques utilisées, le procédé selon ce mode de réalisation de l'invention permet de calculer automatiquement les coordonnées de chaque tronçon, permettant ainsi de déterminer de façon automatique un profil de réglage de l'unité de commande de coupure de tronçons, quelle que soit la largeur de travail puisque c'est une donnée saisie par l'utilisateur, et quel que soit le jeu de disques utilisé puisque les constantes dépendent des caractéristiques de ce jeu de disques.

Par exemple, pour un nombre maximal de six tronçons, une largeur de travail de 24 mètres (donnée saisie par l'utilisateur) et un jeu de disques 24/36 (donnée connue du module de coupure de tronçons, ou validée par l'utilisateur), les valeurs des coordonnées du tronçon 2 sont calculées automatiquement par l'unité de commande du dispositif de distribution, de la manière suivante :

$$DL\_2 = (2-3,5)*(24/6) = -6m,$$

et

$$DA\_2 = (-0,000049*-6^4) + (0,043*-6^2) - 15,23 = -13,7m,$$

avec K4 = -0,000049, K2 = 0,043 et K0 = -15,23.

Ce mode de réalisation de l'invention permet donc à l'utilisateur une saisie simplifiée et ergonomique, car il n'a plus à saisir une multitude de données complexes, à partir d'abaques, et un paramétrage automatique d'un profil de réglage de la coupure de tronçons, permettant de s'adapter à toute largeur de travail et à tout type de jeu de disques utilisé.

*6.3 Description d'un deuxième mode de réalisation*

Selon un deuxième mode de réalisation de l'invention, dont les étapes sont celles illustrées en figure 4 également, le procédé comprend, pour au moins un tronçon N identifié de la représentation de la nappe d'épandage, une étape 41 de calcul des coordonnées de ce tronçon, délivrant une valeur $DL\_N$ de décalage latéral du tronçon N, et une valeur d'un décalage $DA\_N$ derrière le disque d'épandage du tronçon N, cette dernière valeur tenant compte :

- d'un nombre maximal de tronçons;
- d'au moins une première constante représentative du jeu de disques utilisé ;
- d'une donnée de paramétrage saisie par un utilisateur, cette donnée étant par exemple représentative de la largeur de travail $Lw$, en mètre, c'est-à-dire une information facile à connaître et à saisir par l'utilisateur.

Cette donnée de paramétrage est saisie par l'utilisateur de préférence au début du paramétrage, et donc valable pour le calcul du profil de réglage de la coupure de tous les tronçons.

Le résultat de ce calcul, par exemple les valeurs $DA\_N$ et $DL\_N$, est ensuite transmis, lors d'une étape 42 de transmission, au contrôleur de tâche pilotant les moyens de coupure de tronçons.

Selon ce mode de réalisation, le procédé de paramétrage automatique permet de calculer les valeurs des constantes $K0, K2$ et $K4$ déjà décrites ci-dessus, à partir de la connaissance de la valeur moyenne de la plage de travail du jeu de disques, notée $Lmoy$.

Ainsi, les constantes $K0, K2$ et K4 peuvent s'écrire de la façon suivante :

$$K4 = 1,31*10e^{-6}Lmoy - 9,78*10e^{-5},$$

$$K2 = -7,12*10e^{-4}Lmoy + 0,07,$$

$$K0 = -0,17*Lmoy - 9,93.$$

L'équation 1 ci-dessus peut alors s'écrire de manière simplifiée comme suit, pour le calcul de la coordonnée $DA\_N$ :

$$DA\_N = [(1,31*10e^{-6}Lmoy - 9,78*10e^{-5})*DL\_N^4]$$

$$+ [(-7,12*10e^{-4}Lmoy + 0,07)*DL\_N^2]$$

$$+ [(-0,17*Lmoy - 9,93) \qquad \text{(Equation 3)}$$

avec $Lmoy$ la valeur moyenne de la plage de travail du jeu de disques utilisés.

Par exemple, la largeur moyenne est de 45m pour un disque 40/50 (travaillant dans une largeur moyenne comprise en 40 et 50 mètres).

Par ailleurs, comme indiqué dans l'équation 3, le calcul de la coordonnée $DA\_N$ dépend également de la coordonnée $DL\_N$, pouvant être définie comme dans l'équation 2 ci-dessus : $DL\_N = (N - (0,5*Nmax + 0,5))*(Lw/Nmax)$, avec $Nmax$ égal au nombre total de tronçons et $Lw$ étant la longueur de travail saisie par l'utilisateur.

Ainsi, à partir d'une seule saisie utilisateur ($Lw$), des informations connues du nombre maximum de tronçon (valeur par exemple stockée en usine dans l'unité de commande de la machine agricole) et d'une information sur la plage de travail du jeu de disques utilisé, le procédé selon ce mode de réalisation de l'invention permet de calculer automatiquement les coordonnées de chaque tronçon, permettant ainsi de déterminer de façon automatique un profil de réglage de l'unité de commande de coupure de tronçons, quelle que soit la largeur de travail puisque c'est une donnée saisie par l'utilisateur, et quel que soit le jeu de disques utilisé puisque la valeur moyenne du jeu de disques est également une donnée prise en considération, pour la détermination des valeurs des constantes $K0, K2$ et $K4$.

Ce deuxième mode de réalisation de l'invention permet donc également à l'utilisateur une saisie simplifiée et ergonomique, car il n'a plus à saisir une multitude de données complexes, à partir d'abaques, comme avec les techniques de l'art antérieur, et un paramétrage automatique d'un profil de réglage de la coupure de tronçons, permettant de s'adapter à toute largeur de travail et à tout type de jeu de disques utilisé.

*6.4 Illustration des échanges de données selon un mode de réalisation de l'invention*

La figure 5 illustre les principaux échanges de données mis en oeuvre, selon un mode de réalisation particulier de l'invention, entre l'unité de commande de la machine agricole et le contrôleur de tâches de coupure de tronçons.

Ainsi, la valeur du nombre maximal de tronçons, la largeur de travail Lw (saisie par l'utilisateur) et des caractéristiques du jeu de disques utilisés sont des données connues de l'unité de commande de la machine agricole, qui peut ainsi calculer les coordonnées « en X et en Y» de chaque tronçon, par exemple du centre de chaque tronçon, ou d'un point précis identifiable de chaque tronçon (une extrémité gauche la plus éloignée du disque par exemple), à partir d'une ou plusieurs constantes prédéterminées, dépendantes du jeu de disques.

Enfin, pour permettre un réglage de profil de coupure de tronçons, par le contrôleur de tâches, les coordonnées calculées par l'unité de commande sont transmises, par exemple via un ou plusieurs fichiers de type ISO XML, au contrôleur de tâches.

Par ailleurs, en même temps que cette transmission des coordonnées calculées par l'unité de commande, des données telles que l'épaisseur du tronçon (comme illustrée en figure 3c) peuvent également être transmises.

## Revendications

1.  Procédé de paramétrage automatique d'un contrôleur de tâches commandant des moyens de coupure de tronçons d'une machine agricole équipée d'un dispositif d'épandage de particules mettant en oeuvre au moins deux disques rotatifs portant des pales de projection,
    **caractérisé en ce que**, pour au moins un jeu de disques dudit dispositif d'épandage et un tronçon N, ledit procédé comprend une étape (41) de calcul des coordonnées dudit tronçon N tenant compte de la forme de la nappe d'épandage et une étape (42) de transmission desdites coordonnées audit contrôleur de tâches.

2.  Procédé de paramétrage automatique d'un contrôleur de tâches selon la revendication 1,
    **caractérisé en ce que**, ladite étape (41) de calcul délivre une valeur $DL\_N$ de décalage latéral dudit tronçon $N$, et une valeur d'un décalage arrière $DA\_N$ derrière le disque d'épandage dudit tronçon $N$, ladite valeur $DL\_N$ tenant compte des données suivantes :

    - un nombre maximal de tronçons,
    - une donnée de paramétrage représentative de la largeur de travail Lw dudit dispositif d'épandage, saisie par un utilisateur de ladite machine agricole via un module de saisie d'une unité de commande de ladite machine,
    - au moins une première constante représentative dudit jeu de disques.

3.  Procédé de paramétrage automatique d'un contrôleur de tâches selon la revendication 2, **caractérisé en ce que** ladite valeur $DL\_N$ s'écrit de la manière suivante :

    $$DL\_N = (N - (0{,}5*Nmax + 0{,}5))*(Lw/Nmax),\text{ avec } Nmax \text{ égal au nombre total de}$$

    tronçons.

4.  Procédé de paramétrage automatique d'un contrôleur de tâches selon l'une quelconque des revendications 1 à 3, **caractérisé en ce que** ladite étape de calcul comprend une sous-étape de résolution d'une équation présentant au moins trois constantes prédéterminées dépendantes dudit jeu de disques, notée *K0, K2* et *K4.*

5.  Procédé de paramétrage automatique d'un contrôleur de tâches selon la revendication 4, **caractérisé en ce que** ladite équation s'écrit de la manière suivante :

$$DA\_N = (K4*DL\_N^4) + (K2*DL\_N^2) + K0.$$

**6.** Procédé de paramétrage automatique d'un contrôleur de tâches selon la revendication 2, **caractérisé en ce que** ladite première constante prédéterminée est représentative de la plage de travail dudit jeu de disques, notée *Lmoy.*

**7.** Procédé de paramétrage automatique d'un contrôleur de tâches selon la revendication 6, **caractérisé en ce que** ladite valeur *DA_N* s'écrit de la manière suivante :

$$DA\_N = [(1,31*10e^{-6}Lmoy - 9,78*10e^{-5})*DL\_N^4]$$
$$+ [(-7,12*10e^{-4}Lmoy + 0,07)*DL\_N^2]$$
$$+ (-0,17*Lmoy - 9,93).$$

**8.** Procédé de paramétrage automatique d'un contrôleur de tâches selon la revendication 1, **caractérisé en ce que** ladite étape de transmission desdites coordonnées audit contrôleur de tâches met en oeuvre au moins un fichier de type ISO XM L.

**9.** Procédé de paramétrage automatique d'un contrôleur de tâches selon la revendication 1, **caractérisé en ce que** ladite étape de calcul tient compte également d'une donnée représentative du type de particules et/ou d'une donnée représentative d'une forme spécifique d'épandage.

**10.** Procédé de paramétrage automatique d'un contrôleur de tâches selon la revendication 2, **caractérisé en ce que** ladite étape de calcul comprend une sous-étape de correction de ladite valeur *DA_N* en fonction d'une information représentative d'au moins un paramètre appartenant au groupe comprenant :

- une vitesse de rotation desdits disques ;
- un angle d'attelage dudit dispositif d'épandage de particules ;
- une hauteur d'attelage dudit dispositif d'épandage de particules.

**11.** Unité de commande d'une machine agricole équipée d'un dispositif d'épandage de particules mettant en oeuvre au moins deux disques rotatifs portant des pales de projection, ladite machine étant également équipée de moyens de coupure de tronçons commandés par un contrôleur de tâches, **caractérisé en ce que**, pour au moins un jeu de disques dudit dispositif d'épandage et un tronçon *N,* l'unité de commande comprend des moyens de calcul des coordonnées dudit tronçon *N* tenant compte de la forme de la nappe d'épandage et des moyens de transmission desdites coordonnées audit contrôleur de tâches.

**12.** Unité de commande d'une machine agricole selon la revendication 11, **caractérisé en ce que** lesdits moyens de calcul délivrent une valeur *DL_N* de décalage latéral dudit tronçon *N,* et une valeur d'un décalage arrière *DA_N* derrière le disque d'épandage dudit tronçon *N,* ladite valeur *DL_N* tenant compte des données suivantes :

- un nombre maximal de tronçons,
- une donnée de paramétrage représentative de la largeur de travail Lw dudit dispositif d'épandage, saisie par un utilisateur de ladite machine agricole via un module de saisie d'une unité de commande de ladite machine,
- au moins une première constante représentative dudit jeu de disques.

**13.** Machine agricole comprenant une unité de commande selon les revendications 11 ou 12.

**14.** Programme d'ordinateur comportant des instructions pour la mise en oeuvre d'un procédé de paramétrage automatique d'une unité de commande d'une machine agricole selon l'une quelconque des revendications 1 à 10, lorsque ce programme est exécuté par un processeur.

**Patentansprüche**

1. Verfahren zur automatischen Parametrisierung eines Task Controllers, welcher Mittel zur Teilbreitenabschaltung einer landwirtschaftlichen Maschine steuert, die mit einer Partikelstreuvorrichtung ausgestattet ist, bei der wenigstens zwei rotierende Scheiben zum Einsatz kommen, welche Wurfschaufeln tragen, **dadurch gekennzeichnet, dass** für wenigstens einen Scheibensatz der Streuvorrichtung und eine Teilbreite N das Verfahren einen Schritt (41) der Berechnung der Koordinaten der Teilbreite N unter Berücksichtigung der Form des Streubildes und einen Schritt (42) der Übertragung dieser Koordinaten zu dem Task Controller umfasst.

2. Verfahren zur automatischen Parametrisierung eines Task Controllers nach Anspruch 1, **dadurch gekennzeichnet, dass** der Schritt (41) der Berechnung einen Wert $DL\_N$ des seitlichen Versatzes der Teilbreite $N$ und einen Wert des Versatzes nach hinten $DA\_N$ der Teilbreite $N$ hinter die Streuscheibe liefert, wobei der Wert $DL\_N$ die folgenden Daten berücksichtigt:

   - eine maximale Anzahl von Teilbreiten,
   - eine für die Arbeitsbreite $Lw$ der Streuvorrichtung repräsentative Parametriergröße, die von einem Benutzer der landwirtschaftlichen Maschine über ein Erfassungsmodul einer Steuereinheit der Maschine erfasst wird,
   - mindestens eine erste Konstante, die für den Scheibensatz repräsentativ ist.

3. Verfahren zur automatischen Parametrisierung eines Task Controllers nach Anspruch 2, **dadurch gekennzeichnet, dass** der Wert $DL\_N$ wie folgt geschrieben wird:

$$DL\_N = (N - (0{,}5*Nmax + 0{,}5))*(Lw/Nmax),$$

wobei $Nmax$ gleich der Gesamtanzahl der Teilbreiten ist.

4. Verfahren zur automatischen Parametrisierung eines Task Controllers nach einem der Ansprüche 1 bis 3, **dadurch gekennzeichnet, dass** der Berechnungsschritt einen Teilschritt der Lösung einer Gleichung umfasst, die mindestens drei vorbestimmte, von dem Scheibensatz abhängige Konstanten aufweist, die mit $K0, K2$ und $K4$ bezeichnet werden.

5. Verfahren zur automatischen Parametrisierung eines Task Controllers nach Anspruch 4, **dadurch gekennzeichnet, dass** die Gleichung wie folgt lautet:

$$DA\_N = (K4*DL\_N^4) + (K2*DL\_N^2) + K0.$$

6. Verfahren zur automatischen Parametrisierung eines Task Controllers nach Anspruch 2, **dadurch gekennzeichnet, dass** die erste vorbestimmte Konstante für den Arbeitsbereich des Scheibensatzes repräsentativ ist und mit $Lmoy$ bezeichnet wird.

7. Verfahren zur automatischen Parametrisierung eines Task Controllers nach Anspruch 6, **dadurch gekennzeichnet, dass** der Wert $DA\_N$ wie folgt geschrieben wird:

$$DA\_N = [(1{,}31*10e^{-6}Lmoy - 9{,}78*10e^{-5})*DL\_N^4]$$
$$+ [(-7{,}12*10e^{-4}Lmoy + 0{,}07)*DL\_N^2]$$
$$+ (-0{,}17*Lmoy - 9{,}93).$$

8. Verfahren zur automatischen Parametrisierung eines Task Controllers nach Anspruch 1, **dadurch gekennzeichnet, dass** in dem Schritt der Übertragung der Koordinaten zu dem Task Controller mindestens eine Datei vom Typ ISO XML verwendet wird.

9. Verfahren zur automatischen Parametrisierung eines Task Controllers nach Anspruch 1, **dadurch gekennzeichnet, dass** der Berechnungsschritt außerdem Daten, die für den Partikeltyp repräsentativ sind, und/oder Daten, die für eine spezielle Form des Streuens repräsentativ sind, berücksichtigt.

10. Verfahren zur automatischen Parametrisierung eines Task Controllers nach Anspruch 2, **dadurch gekennzeichnet, dass** der Berechnungsschritt einen Teilschritt der Korrektur des Wertes $DA\_N$ in Abhängigkeit von einer Information umfasst, die für mindestens einen Parameter repräsentativ ist, der einer Gruppe angehört, welche umfasst:

- eine Rotationsgeschwindigkeit der Scheiben;
- einen Anbauwinkel der Partikelstreuvorrichtung,
- eine Anbauhöhe der Partikelstreuvorrichtung.

11. Steuereinheit einer landwirtschaftlichen Maschine, die mit einer Partikelstreuvorrichtung ausgestattet ist, bei der mindestens zwei rotierende Scheiben zum Einsatz kommen, welche Wurfschaufeln tragen, wobei die Maschine außerdem mit Mitteln zur Teilbreitenabschaltung ausgestattet ist, die von einem Task Controller gesteuert werden, **dadurch gekennzeichnet, dass** für mindestens einen Scheibensatz der Streuvorrichtung und eine Teilbreite N die Steuereinheit Mittel zur Berechnung der Koordinaten der Teilbreite N unter Berücksichtigung der Form des Streubildes und Mittel zur Übertragung dieser Koordinaten zu dem Task Controller umfasst.

12. Steuereinheit einer landwirtschaftlichen Maschine nach Anspruch 11, **dadurch gekennzeichnet, dass** die Mittel zur Berechnung einen Wert $DL\_N$ des seitlichen Versatzes der Teilbreite $N$ und einen Wert des Versatzes nach hinten $DA\_N$ der Teilbreite $N$ hinter die Streuscheibe liefern, wobei der Wert $DL\_N$ die folgenden Daten berücksichtigt:

- eine maximale Anzahl von Teilbreiten,
- eine für die Arbeitsbreite $Lw$ der Streuvorrichtung repräsentative Parametriergröße, die von einem Benutzer der landwirtschaftlichen Maschine über ein Erfassungsmodul einer Steuereinheit der Maschine erfasst wird,
- mindestens eine erste Konstante, die für den Scheibensatz repräsentativ ist.

13. Landwirtschaftliche Maschine, die eine Steuereinheit nach Anspruch 11 oder 12 umfasst.

14. Computerprogramm, welches Anweisungen für die Durchführung eines Verfahrens zur automatischen Parametrisierung einer Steuereinheit einer landwirtschaftlichen Maschine nach einem der Ansprüche 1 bis 10, wenn dieses Programm von einem Prozessor ausgeführt wird, aufweist.

## Claims

1. Process for automatic parameterisation of a task controller controlling section-cutting means of an agricultural machine equipped with a particle-spreading device using at least two rotating discs bearing projection blades, **characterised in that** for at least one set of discs of said spreading device and a section $N$ said process includes a step (41) of calculation of the coordinates of said section $N$, taking account of the shape of the spreading layer, and a step (42) of transmission of said coordinates to said task controller.

2. Process for automatic parameterisation of a task controller, according to Claim 1, **characterised in that** said calculation step (41) outputs a value $DL\_N$ of lateral offset of said section $N$ and a value of a rear offset $DA\_N$ behind the spreading disc of said section $N,$ said value $DL\_N$ taking account of the following data:

- a maximum number of sections,
- a parameterisation datum that is representative of the working width $Lw$ of said spreading device, said datum having been input by a user of said agricultural machine via an input module of a control unit of said machine,
- at least one first constant that is representative of said set of discs.

3. Process for automatic parameterisation of a task controller, according to Claim 2, **characterised in that** said value $DL\_N$ is written in the following way:

$$DL\_N = (N - (0.5*Nmax + 0.5))*(Lw/Nmax),$$

with *Nmax* equal to the total number of sections.

4. Process for automatic parameterisation of a task controller, according to any one of Claims 1 to 3, **characterised in that** said calculation step includes a substep of solution of an equation having at least three predetermined constants which are dependent on said set of discs, denoted by *K0, K2* and *K4.*

5. Process for automatic parameterisation of a task controller, according to Claim 4, **characterised in that** said equation is written in the following way:

$$DA\_N = (K4*DL\_N^4) + (K2*DL\_N^2) + K0.$$

6. Process for automatic parameterisation of a task controller, according to Claim 2, **characterised in that** said first predetermined constant is representative of the working range of said set of discs, denoted by *Lmoy.*

7. Process for automatic parameterisation of a task controller, according to Claim 6, **characterised in that** said value *DA_N* is written in the following way:

$$DA\_N = [(1.31*10e^{-6}Lmoy - 9.78*10e^{-5})*DL\_N^4]$$
$$+ [(-7.12*10e^{-4}Lmoy + 0.07)*DL\_N^2]$$
$$+ (-0.17*Lmoy - 9.93).$$

8. Process for automatic parameterisation of a task controller, according to Claim 1, **characterised in that** said step of transmission of said coordinates to said task controller uses at least one file of type ISO XML.

9. Process for automatic parameterisation of a task controller, according to Claim 1, **characterised in that** said calculation step also takes account of a datum that is representative of the type of particles and/or of a datum that is representative of a specific form of spreading.

10. Process for automatic parameterisation of a task controller, according to Claim 2, **characterised in that** said calculation step includes a substep of correction of said value *DA_N* as a function of an item of information that is representative of at least one parameter pertaining to the group comprising:

   • a speed of rotation of said discs;
   • a coupling angle of said particle-spreading device;
   • a coupling height of said particle-spreading device.

11. Control unit of an agricultural machine equipped with a particle-spreading device using at least two rotating discs bearing projection blades, said machine also being equipped with section-cutting means controlled by a task controller,
   **characterised in that**, for at least one set of discs of said spreading device and a section *N*, the control unit includes means for calculation of the coordinates of said section *N*,
   taking account of the shape of the spreading layer, and means for transmission of said coordinates to said task controller.

12. Control unit of an agricultural machine, according to Claim 11, **characterised in that** said calculation means output a value *DL_N* of lateral offset of said section *N* and a value of a rear offset *DA_N* behind the spreading disc of said section *N,* said value *DL_N* taking account of the following data:

   - a maximum number of sections,
   - a parameterisation datum that is representative of the working width *Lw* of said spreading device, said datum having been input by a user of said agricultural machine via an input module of a control unit of said machine,
   - at least one first constant that is representative of said set of discs.

**13.** Agricultural machine including a control unit according to Claim 11 or 12.

**14.** Computer program comprising instructions for the implementation of a process for automatic parameterisation of a control unit of an agricultural machine, according to any one of Claims 1 to 10, when said program is executed by a processor.

**Figure 1**

**Figure 2**

**Figure 3a**

**Figure 3b**

**Figure 3c**

*Forme nappe*
*épandage*

Calcul coordonnées    41

*DA_N, DL_N*

Transmission coordonnées    42

# Figure 4

Utilisateur      Unité commande machine      Contrôleur de tâches

*Lw / Jeu de disques*

*Nmax*

Calcul coordonnées *DA_N, DL_N*

ISO XML (*X, Y*)

# Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0726024 A
- EP 0761084 A
- EP 0917816 A
- EP 1181857 A
- EP 2198683 A